# EUROPEAN PATENT APPLICATION

(11) **EP 1 515 415 A2**
(43) Date of publication of application: **16.03.2005**
(21) Application number: 04021261.5
(22) Date of filing: 08.09.2004
(51) Int. Cl.: H02K 7/06, F16H 25/20, F16D 3/223

(54) **Electrically driven linear actuator**

(30) Priority: 09.09.2003 JP 2003316188
(71) Applicant: NTN CORPORATION, Osaka (JP)
(72) Inventor: Keisuke, Kazuno,, Iwata-shi, Shizuoka-ken (JP)
(74) Representative: Thielmann, Andreas

(57) **Abstract**

According to the present invention there is provided an electrically driven linear actuator which is compact and does not require a complex electric control by providing a mechanical linear clutch on an output shaft of the actuator which can cut off the axial load. One preferable embodiment of the present invention is an electrically driven linear actuator comprising an electric motor (3) mounted on a housing (2); a nut (6) connected to a motor shaft (3a) of the motor (3) via a spur gear (4); the nut (6) being supported on the housing (2) rotatably and immovably in an axial direction, a ball screw (8) inserted in the nut (6) via a plurality of balls (7) not-rotatably and movably in an axial direction; an output shaft (15) connected to the screw shaft (8) in-line therewith via a transmitting pin (12); and a mechanical linear clutch (9) arranged at a region near the connection of the output shaft (15) to the screw shaft (8).

## Description

### BACKGROUND OF THE INVENTION

### Field of the Invention

The present invention relates to an electrically driven linear actuator used in a driving train of a vehicle such as an automobile, and more particularly to an electrically driven linear actuator for converting the rotary motion of an electric motor to the linear motion of an output shaft of the actuator via a ball screw mechanism.

### Description of Background Art

In the electrically driven linear actuator used in many kinds of driving mechanisms of a vehicle such as an automobile and the like, it is usually used a trapezoidal screw thread or a gear mechanism such as a rack and pinion as a mechanism for converting the rotary motion of the electric motor to the linear motion in an axial direction. These converting mechanism usually have sliding contact portions and thus a defect of power loss which needs power up of the electric motor and thus is obliged to increase the power consumption. Accordingly, a ball screw mechanism has been increasingly used as a more efficient actuator.

When the ball screw mechanism is used in a rear wheel steering mechanism or a friction clutch mechanism for controlling its power transmission, no counter input torque is caused in the converting mechanism using the trapezoidal screw thread even if an external axial load is applied. On the contrary, since the efficiency of ball screw mechanism is high irrespective of its working direction, it is afraid that a holding torque against an axial load would be caused in the electric motor and thus new problems such as heat generation of the motor or increase of the power consumption are caused in the ball screw mechanism.

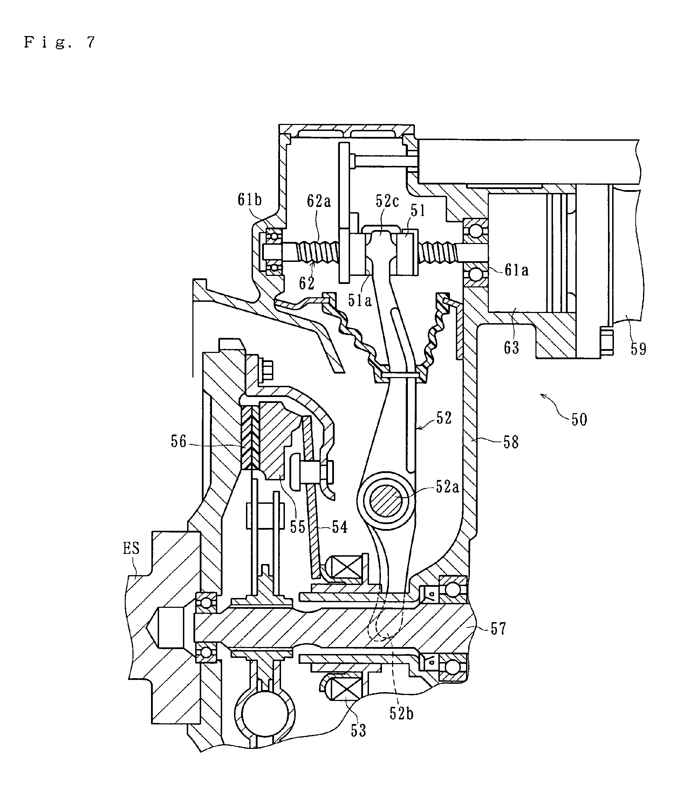

It is known an electrically driven linear actuator shown in Fig. 7 which can solve the problems mentioned above. This actuator 50 is used for the engagement/disengagement control of a friction clutch of a transmission. When a slider 51 is moved toward the right, one end 52c of a release fork 52 connected to the slider 51 is also moved toward the right and thus the release fork 52 is pivoted around its central portion 52a to the clockwise direction. The other end 52b of the release fork 52 pushes a release bearing 53 toward the left and thus the inner circumferential portion of a diaphragm spring 54 is pushed toward the left to release the urging force of the pressure plate 55. Accordingly, a friction disk 56 is freed, the connection between an output shaft ES of an engine and a main shaft 57 is released, and thus the main clutch occupies its "OFF" condition. On the contrary, if the slider 51 is moved to the left, reverse operations are carried out and the main clutch occupies its "ON" condition.

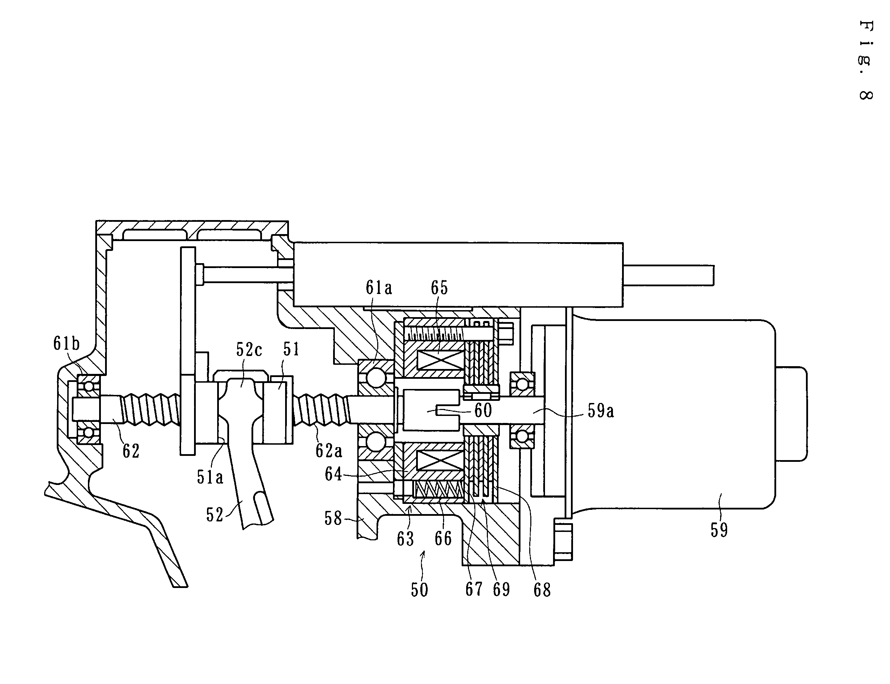

As shown in Fig. 8, the electrically driven actuator 50 comprises an electric motor 59 mounted on a transmission housing 58; a rotation shaft 62 connected to a motor shaft 59a via a coupling 60, axially extending in-line with the motor shaft 59a, and rotatably supported relative to the transmission housing 58 by a pair of rolling bearing 61a and 61b; and a electromagnetic brake 63 driven by the electromagnetic force to hold the motor shaft 59a in the fixed condition.

A helical ball screw groove 62a is formed around the rotation shaft 62 and a slider 51 engages with the ball screw groove 62a via balls (not shown). Thus the slider 51 is moved to left and right directions along the rotation shaft 62 in accordance with the rotation of the rotation shaft 62. That is, the rotary motion of the rotation shaft 62 is converted to the axial motion of the slider 51 by the ball screw mechanism. Since one end 52c of release fork 52 engages within the engaging grooves 51a of the slider 51, the release fork 52 is pivoted around its pivot point to carry out the engagement/disengagement control of the main clutch.

The electromagnetic brake 63 comprises a body 64 secured within the housing 58, an electromagnetic coil 65 and compression springs 66 arranged within the body 64, and brake disks 69 arranged between a plate 67 arranged opposed to the side of the body 64 and an end plate 68. When the electromagnetic coil 65 is not energized, the brake disks 69 are immobilized and thus the shaft 59a of the electric motor 59 is held in the immobilized condition. On the contrary, when the coil 65 is energized, the plate 67 is moved by electromagnetic force generated in the coil 65 against the urging force of the compression springs 66. Thus since the sandwiching force caused by the plate 67 and the end plate 68 is released, the brake disks 69 are freed from the sandwiching force and thus the shaft 59a of the motor 59 occupies a freely rotatable condition.

The electromagnetic brake 63 makes the rotation shaft 62 the free condition by energizing the coil 65 when desiring the change of the engagement/disengagement condition of the main clutch, and makes the rotation shaft 62 the immobilized condition by stopping the energization of coil 65 when desiring to keep the main clutch intact. Accordingly, driving electric power is required only when the engagement/disengagement condition of the main clutch is to be changed and thus it is possible to improve the power consumption by normally stopping the energization of the electric motor 59 (see Japanese Laid-open Patent Publication No. 256359/1993).

However, the electrically driven actuator 50 of the prior art requires the electric control and thus it is required to reduce the power consumption and simplification of the control of the actuator.

### SUMMARY OF THE INVENTION

It is, therefore, an object of the present invention to solve the problems of the prior art and to provide an electrically driven linear actuator which is compact and does not require a complex electric control by providing a mechanical linear clutch on an output shaft of the actuator which can cut off the axial load.

For achieving the object, there is provided, according to the present invention of claim 1, an electrically driven linear actuator comprising an electric motor; a ball screw mechanism connected to an output shaft of the electric motor via a power transmitting means for converting the rotary motion of the electric motor to the linear motion of an output shaft of the actuator; a housing for containing the ball screw mechanism, the electric motor and the power transmitting means; an output shaft connected to the ball screw mechanism in-line therewith; and a linear clutch arranged at a region near the connection between the ball screw mechanism and the output shaft.

According to this structure, since the output shaft is connected to the ball screw mechanism in-line therewith and the linear clutch is arranged at a region near the connection between the ball screw mechanism and the output shaft, it is possible to prevent the generation of the counter input torque to the electric motor via the ball screw mechanism and also possible to prevent the heat generation in the motor as well as the increase of power consumption.

The ball screw mechanism may be connected to the output shaft of the electric motor via a spur gear connection as defined in claim 2, or may be connected to the output shaft of the electric motor via a coupling as defined in claim 3. This structure prevents the direct counter input of the axial load applied to the output shaft to the electric motor and thus it is possible to reduce the shock applied to the motor as well as to improve the durability of the motor.

According to the preferable embodiment of claim 4, the linear clutch comprises an outer ring fitted in the housing and having a cylindrical inner circumferential surface; a cylindrical holding portion formed at one end of the ball screw mechanism and formed with pockets arranged at equidistant positions in the circumferential direction; an output shaft slidably inserted in the holding portion and formed around its outer circumferential surface with an engaging surface of annular shallow V-shaped configuration; and engaging elements retained within the pockets via elastic elements and axially movable within a wedge-shaped annular space formed between the engaging surface and the outer ring. This structure enables to provide an electrically driven linear actuator of compact mechanical design which does not require the complex electric control of the prior art.

According to the preferable embodiment of claim 5, the holding portion and the output shaft are mutually connected via a transmitting pin, and a pin insertion bore formed in the output shaft has an inner diameter larger by a predetermined amount than the outer diameter of the transmitting pin. This structure enables the engaging elements to contact the engaging surface of the output shaft and to engage with the wedge shaped annular space formed between the engaging surfaces and the inner circumferential surface of the outer ring. Thus it is possible to prevent the axial movement of the output shaft and the transmission of the counter input torque to the electric motor via the ball screw mechanism.

The nut of the ball screw mechanism may be supported rotatably relative to the housing and immovably in the axial direction, and a screw shaft may be inserted in the nut via a plurality of balls not-rotatably and axially movably as defined in claim 6, or the screw shaft of the ball screw mechanism may be supported rotatably relative to the housing and immovably in the axial direction, and the nut may be inserted over the screw shaft via a plurality of balls not-rotatably and axially movably. This structure enables to make the actuator compact with a simple structure,

### [Effects of the invention]

According to the present invention, since the electrically driven linear actuator comprises an electric motor; a ball screw mechanism connected to an output shaft of the electric motor via a power transmitting means for converting the rotary motion of the electric motor to the linear motion of an output shaft of the actuator; a housing for containing the ball screw mechanism, the electric motor_and the power transmitting means; an output shaft connected to the ball screw mechanism in-line therewith; and a linear clutch arranged at a region near the connection between the ball screw mechanism and the output shaft, it is possible to prevent the generation of the counter input torque to the electric motor via the ball screw mechanism and also possible to prevent the heat generation in the motor as well as the increase of power consumption.

### [Best mode for carrying out the present invention]

The nut is connected to the shaft of the electric motor mounted on the housing via the spur gear train. The nut is supported on the housing rotatably and immovably in the axial direction. The screw shaft is inserted in the nut and supported therein by the nut via a plurality of balls so that it cannot rotate but can move in the axial direction. The output shaft of the actuator is connected to the ball screw mechanism in-line therewith and the linear clutch is arranged at a region near the connection between the ball screw mechanism and the output shaft.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing a first embodiment of the electrically driven linear actuator of the present invention;
Fig. 2 is a cross section view taken along a line II-II of Fig. 1;
Fig. 3 is a partially enlarged longitudinal section view of the linear clutch of the present invention showing its neutral position;
Fig. 4 is a partially enlarged longitudinal section view of the linear clutch of the present invention showing a condition of the engaging elements being in their disengaged position;
Fig. 5 is a partially enlarged longitudinal section view of the linear clutch of the present invention showing a condition of the engaging elements being in their engaged position;
Fig. 6 is a longitudinal section view showing a second embodiment of the electrically driven linear actuator of the present invention;
Fig. 7 is a longitudinal section view showing an electrically driven linear actuator of the prior art and a main clutch actuated by the actuator; and
Fig. 8 is a longitudinal section view showing the structure of the electrically driven actuator of the prior art.

### DESCRIPTION OF THE PREFERRED EMBODIMENTS

Referring now to the figures where like numerals are used to designate like structure throughout the drawings, preferable embodiments of the present invention will be hereinafter described.

### [First embodiment]

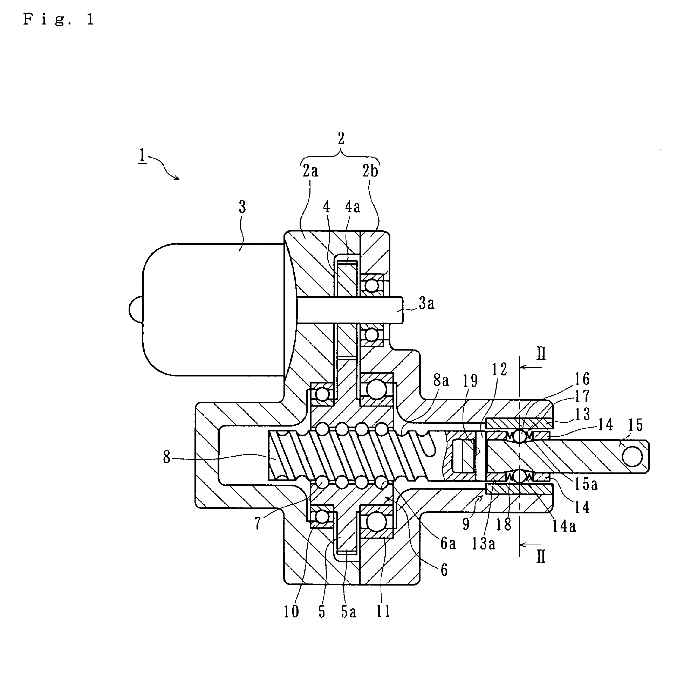

Fig. 1 is a longitudinal section view showing a first embodiment of the electrically driven linear actuator of the present invention.

The electrically driven linear actuator 1 comprises an electric motor 3 mounted on a housing 2, a spur gear 4 mounted on a motor shaft 3a of the motor 3, a nut 6 integrally formed with a flange 5 having teeth 5a mating with teeth 4a of the spur gear 4, a screw shaft 8 inserted in the nut 6 via a plurality of balls 7, and a linear clutch 9 connected to one end of the screw shaft 8.

The nut 6 is supported on the housing 2 by a pair of rolling bearings 10 and 11 rotatably but axially immovably relative to the housing 2 and formed with a helical screw groove 6a on the inner circumferential surface thereof. On the contrary, the screw shaft 8 is formed around its outer circumferential surface with a helical screw groove 8a corresponding to the screw groove 6a. The screw shaft 8 is supported within the nut 6 not rotatably but axially movably relative thereto via a plurality of balls 7 arranged between the screw grooves 6a and 8a. This forms so-called a ball screw mechanism. With energizing the motor 3, the nut 6 is rotated via the spur gear 4 and thus the screw shaft 8a is axially moved (toward the right in Fig. 1). That is, the rotary motion of the motor shaft 3a is converted to the axial motion of the screw shaft 8 via the ball screw mechanism.

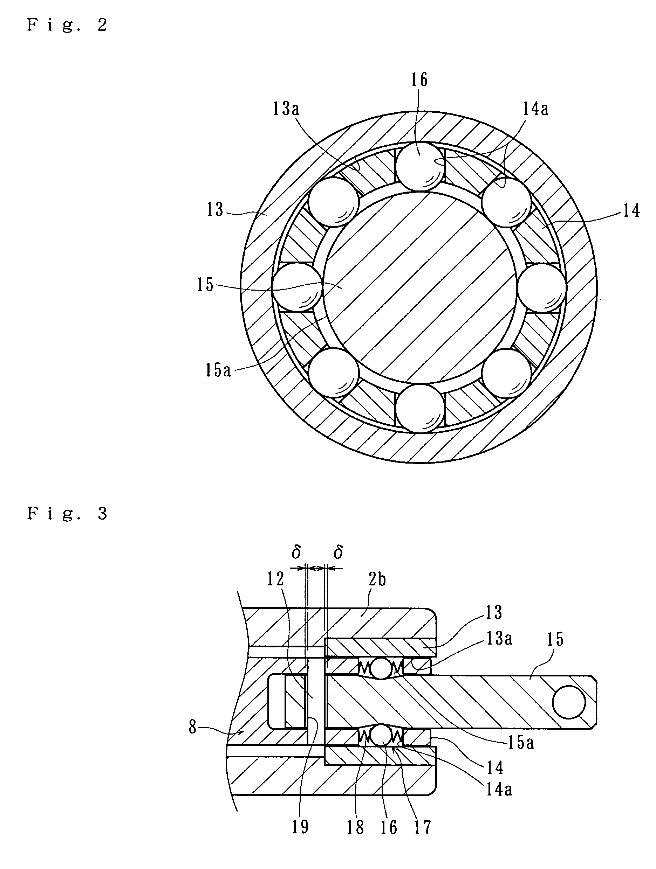

The linear clutch 9 is connected to one end of the screw shaft 8 via a transmitting pin 12. The linear clutch 9 comprises an outer ring 13 having a cylindrical inner circumferential surface and fitted in the housing 2b, an output shaft 15 slidably inserted in a cylindrical holding portion 14 formed at one end of the screw shaft 8, and a plurality of engaging elements (balls) 16 retained between an engaging surface 15a of annular shallow V-shaped configuration formed around outer circumferential surface of the output shaft 15 and the inner circumferential surface 13a of the outer ring 13. A wedge-shaped annular space 17 is formed between the engaging surface 15a and the inner circumferential surface of the outer ring 13. As shown in Fig. 2, the engaging elements 16 are held within pockets 14a formed in the holding portion 14 at equidistant positions in the circumferential direction via elastic elements 18 so that they are held at their axially neutral positions. Although it is shown in the illustrated embodiment that the engaging elements 16 are arranged as one row configuration, it is possible to adopt a double row arrangement. In addition, it is also possible to use rollers as engaging elements 16.

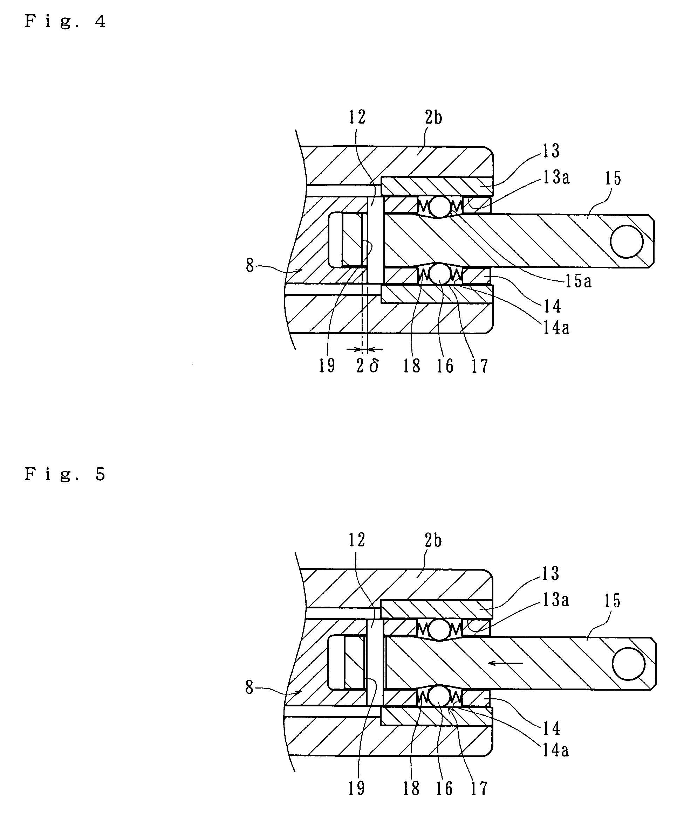

The output shaft 15 is formed with a pin insertion bore 19 having a diameter larger than the outer diameter of the transmitting pin 12 by a predetermined amount ("2δ" as shown in Fig. 4). Thus the output shaft 15 can axially shift relative to the screw shaft 8 by "2δ".

Then the operation of the linear clutch 9 of the present invention will be described with reference to Fig. 3 through Fig. 5.

As shown in Fig. 3, the transmitting pin 12 secured in the holding portion 14 of the screw shaft 8 is inserted in the bore 19 of the output shaft 15 with the predetermined axial gap "δ". When the screw shaft 8 is axially moved (toward the right in Fig. 3), the pin 12 contacts the side of the bore 19 and shifts the output shaft 15 to the same direction together with the screw shaft 8. During this term, the engaging elements 16 held within the pockets 14a of the holding portion 14 move together with the output shaft 15 with being kept in their neutral positions by the elastic elements 18 within the wedge-shaped annular space 17 without engaging the engaging surface 15a. Accordingly, the axial shift of the output shaft 15 is never interrupted.

On the contrary, when an external axial load (toward the left in Fig. 5) is applied to the output shaft 15 as shown in Fig. 5, the output shaft 15 tends to be shifted toward the left relative to the screw shaft 8. However, since the engaging elements 16 contact the engaging surface 15a of the output shaft 15 and thus engage the wedge-shaped space 17 formed between the engaging surface 15a and the inner circumferential surface of the outer ring 13, the axial shift of the output shaft 15 is prevented and thus any counter input torque is not applied to the electric motor 3 via the ball screw mechanism. That is, the screw shaft 8 is not caused to move to the same direction by the output shaft 15 as the direction of the output shaft 15 and thus it is possible to prevent heat generation of the motor or increase of the power consumption. In addition, since the motor shaft 3a of the motor 3 is connected to the nut 6 via the power transmitting means of spur gear 4, the axial load applied to the output shaft 15 is not directly counter inputted to the motor 3.

Accordingly, it is possible to provide a compact electrically driven linear actuator without requiring any complex electric control of the prior art by providing on the output shaft 15 the mechanical linear clutch 9 of the present invention which can cut off the transmission of axial load.

### [Second embodiment]

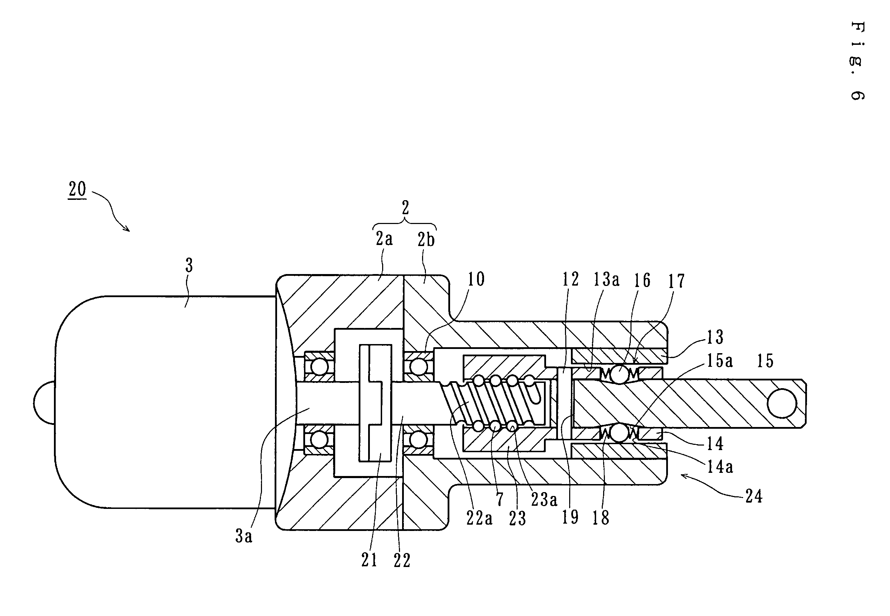

Fig. 6 is a longitudinal section view showing a second embodiment of the electrically driven linear actuator of the present invention. This second embodiment is different only in the structure of the ball screw mechanism and thus same structural elements as those used in the first embodiment are denoted by same reference numerals as those used in the first embodiment and detailed description of them will be omitted.

The electrically driven linear actuator 20 of this embodiment comprises the electric motor 3 mounted on the housing 2, a screw shaft 22 connected to the motor shaft 3a of the motor 3 via coupling 21, a nut 23 inserted over the screw shaft 22 via the plurality of balls 7 not-rotatably and axially movably, and a linear clutch 24 connected to one end of the nut 23.

The screw shaft 22 is supported on the housing 2 by the rolling bearing 10 rotatably but axially immovably relative to the housing 2 and formed with a helical screw groove 22a on the outer circumferential surface thereof. On the contrary, the nut 23 is formed on its inner circumferential surface with a helical screw groove 23a corresponding to the screw groove 22a. The nut 23 is supported on the screw shaft 22 not-rotatably but axially movably relative to the housing via a plurality of balls 7 arranged between the screw grooves 22a and 23a. This also forms so-called a ball screw mechanism. With energizing the motor 3, the screw shaft 22 is rotated and thus the nut 23 is axially moved.

The linear clutch 24 is connected to one end of the nut 23 via the transmitting pin 12. The linear clutch 24 comprises the outer ring 13 fitted in the housing 2b, the output shaft 15 slidably inserted in the cylindrical holding portion 14 formed at one end of the nut 23, and a plurality of engaging elements 16 retained between an engaging surface 15a of annular shallow V-shaped configuration formed around outer circumferential surface of the output shaft 15 and the inner circumferential surface 13a of the outer ring 13. The wedge-shaped annular space 17 is formed between the engaging surface 15a and the inner circumferential surface 13a of the outer ring 13. The engaging elements 16 are held within pockets 14a formed in the holding portion 14 at equidistant positions in the circumferential direction via elastic elements 18 so that they are held at their axially neutral positions.

The output shaft 15 is formed with the pin insertion bore 19 having a diameter larger than the outer diameter of the transmitting pin 12 by a predetermined amount. Thus the output shaft 15 can axially shift relative to the nut 23 by said predetermined amount. The operation of this linear clutch 24 is same as that of the linear clutch 9 of the first embodiment and thus its explanation will be omitted.

Accordingly, it is possible to provide a compact electrically driven linear actuator without requiring any complex electric control of the prior art by providing on the output shaft 15 the mechanical linear clutch 24 of the present invention which can cut off the transmission of axial load. In addition, since the screw shaft 22 is connected to the motor shaft 3a via the coupling 21, shock to the electric motor 3 can be reduced by the coupling 21. Furthermore, since the nut 23 is not caused to move to the same direction by the output shaft 15 as the direction of the output shaft 15 and the screw shaft 22 is not caused to be rotated by the axial motion of the nut 23, it is possible to prevent heat generation of the motor or increase of the power consumption.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### [Applicability to industry]

The electrically driven linear actuator of the present invention can be applied to an actuator for a rear wheel steering mechanism or a friction clutch mechanism for controlling its power transmission.

## Claims

1. An electrically driven linear actuator (1) comprising an electric motor (3); a ball screw mechanism connected to an output shaft (3a) of the electric motor (3) via a power transmitting means for converting the rotary motion of the electric motor to the linear motion of an output shaft (15) of the actuator; a housing (2) for containing the ball screw mechanism, the electric motor (3) and the power transmitting means; an output shaft (15) connected to the ball screw mechanism in-line therewith; and a linear clutch (9 or 24) arranged at a region near the connection between the ball screw mechanism and the output shaft (15).

2. An electrically driven linear actuator of claim 1 wherein said ball screw mechanism is connected to the output shaft (3a) of the electric motor (3) via a spur gear connection (4, 4a and 5a).

3. An electrically driven linear actuator of claim 1 wherein said ball screw mechanism is connected to the output shaft (3a) of the electric motor (3) via a coupling (21).

4. An electrically driven linear actuator of any one of claims 1 through 3 wherein said linear clutch (9 or 24) comprises an outer ring (13) fitted in the housing (2) and having a cylindrical inner circumferential surface (13a); a cylindrical holding portion (14) formed at one end of the ball screw mechanism and formed with pockets (14a) arranged at equidistant positions in the circumferential direction; an output shaft (15) slidably inserted in the holding portion (14) and formed around its outer circumferential surface with an engaging surface (15a) of annular shallow V-shaped configuration; and engaging elements (16) retained within the pockets (14) via elastic elements (18) and axially movable within a wedge-shaped annular space (17) formed between the engaging surface (15a) and the outer ring (13).

5. An electrically driven linear actuator of claim 4 wherein said holding portion (14) and the output shaft (15) are mutually connected via a transmitting pin (12), and a pin insertion bore (19) formed in the output shaft has an inner diameter larger by a predetermined amount than the outer diameter of the transmitting pin (12).

6. An electrically driven linear actuator of any one of claims 1 through 5 wherein a nut (6) of the ball screw mechanism is supported rotatably relative to the housing (2) and immovably in the axial direction, and a screw shaft (8) is inserted in the nut (6) via a plurality of balls (7) not-rotatably and axially movably.

7. An electrically driven linear actuator of any one of claims 1 through 5 wherein a screw shaft (22) of the ball screw mechanism is supported rotatably relative to the housing (2) and immovably in the axial direction, and a nut (23) is inserted over the screw shaft (22) via a plurality of balls (7) not-rotatably and axially movably.
